# EUROPÄISCHE PATENTANMELDUNG

(11) **EP 1 657 497 A1**
(43) Veröffentlichungstag der Anmeldung: **17.05.2006**
(21) Anmeldenummer: 05002433.0
(22) Anmeldetag: 04.02.2005
(51) Int. Cl.: F24D 3/16, F24J 2/28, F24J 2/04

(54) **Wärmetauschendes Element**

(30) Priorität: 28.09.2004 DE 102004047438
(71) Anmelder: Mostafa, Kamal, Dr., 42113 Wuppertal (DE)
(72) Erfinder: Mostafa, Kamal, Dr., 42113 Wuppertal (DE)
(74) Vertreter: Berg, Eike Karl

(57) **Zusammenfassung**

Vorgeschlagen wird ein wärmetauschendes Element, mit
- einer Basisschicht (4) und einer ihr gegenüberliegenden Abschlussschicht (6)
- zwischen der Basisschicht (4) und der Abschlussschicht (6) positionierten Mitteln (3) zur Führung einer Flüssigkeit im Inneren des Elements, wobei die Flüssigkeit der Energieaufnahme bzw. Energieabgabe dient,
- einer mit den Mitteln (3) verbundenen Zuleitung (1) zur Zuführung der Flüssigkeit zum Element,
- einer mit den Mitteln (3) verbundenen Abführung (2) zur Abführung der Flüssigkeit aus dem Element
wobei
□ die Mittel (3) eine flüssigkeitsdurchlässige Mittelschicht aus einer Schüttung ungebundener Partikel eines einheitlichen Partikelgrößenberelchs sind,
□ die Basisschicht (4) und die Abschlussschicht (6) zusammen mit ihnen benachbarten Seitenbegrenzungen (5) eine flüssigkeitsundurchlässige Umhüllung der flüssigkeitsdurchlässigen Mittelschicht bilden.

Die Basisschicht (4) kann einseitig mit einer, bevorzugt beidseitig jeweils mit einer Versteifungsschicht (9) versehen sein. Zur Verbindung der die Mittelschicht (3) bildenden Partikel mit der Basisschicht (4) weist diese eine pastös aufgebrachte Kleberschicht (10) auf.

## Beschreibung

Die Erfindung betrifft ein wärmetauschendes Element gemäß dem Oberbegriff von Patentanspruch 1, zahlreichs Ausführungsformen und -varianten sowie Verfahren zur Herstellung des erfindungsgemäßen wärmetauschenden Elements.

Bekannt ist ein gattungsgemäßes Element beispielsweise in Form einer Fliese mit Ober- und Unterschicht, zwischen denen dunne Metall- oder Kunststoff-Röhrchen mit zwei äußeren Anschlüssen zur Zu- und Abteilung verlegt sind. Die Röhrchen werden mit kaltem oder warmem Wasser durchströmt, um das Element als wärmende oder kühlende Fläche zu nutzen.

So ist Gegenstand der **EP 0 916 061 A1** eine heizende oder kühlende Bauplatte mit Luftkonditionierung, die aus einer Basisplatte zum Beispiel aus Styropor besteht, in die eine Vielzahl an zueinander parallelen Rillen eingelassen sind. In die Rillen sind kapillare Röhrchen zur Führung der konditionierenden Flüssigkeit eingelassen. Die mit den Röhrchen versehenen Rillen sind mit einer Faservlies verstärkten Betonplatte verschlossen.

Einem Vorschlag aus der **EP 1 409 927 A1** zufolge bestehen die unter einer Oberflachenschicht angeordneten Wärmetauschkomponenten einer Wärmeübertragungsfliese aus einer Vielzahl von parallel ausgerichteten Einzelplatten, zwischen denen Kanäle zur Hindurchleitung einer Heizflüssigkeit ausgebildet sind.
Eine vergleichbare Idee liegt einem Luftkühler gemäß der **SU 1 198 369 A** zu Grunde, bei dem kapillare Wasserkanäle zwischen aneinander angrenzenden mikroporösen Platten ausgeformt sind.

Nachteilig an den bekannten Bauplatten der hier beschriebenen Art ist die aufwendige Herstellung des Führungssystems für die Heiz- bzw. Kühlflüssigkeit und die selbsttragende Ausführung der Oberflächenschicht, weshalb die bekannten Bauplatten einerseits teuer in der Herstellung sind und andererseits wegen der notwendigen Dicke der Oberflächenschicht auch eine weniger überzeugende Energienutzung aufweisen.

Aus einem Vorschlag gemäß der **DE 29 24 305 B1** ist ein hohlplattenförmiges Wärmeaustauschelement bekannt, das vollständig aus Beton oder aus durch Kunstharz gebundenem Sand besteht. Der innere Hohlraum des vorgeschlagenen Wärmeaustauschelements ist vollständig mit Heizwasser ausgefüllt, das über die Seitenwände durchstoßende Zu- und Abführstutzen zu- bzw. abgeführt werden kann. Die hohle Ausführung des bekannten Wärmeaustauschelements macht eine massive Ausführung der zur Nutzseite hin abschließenden Strahlungsfläche notwendig, was jedweder effektiven Nutzung des bekannten Wärmeaustauschelements entgegensteht.

Schließlich beschreibt die **DE 32 38 970 A1** eine Fußboden- oder Wandplatte für ein Warmwasser- oder Elektroflächenheizungssystem. Die bekannte Platte umfasst ein als Wanne ausgeformtes Bodenelement zur Wasserführung sowie zur Montage und Wärmeisolation gegenüber einer Baufläche, auf die die bekannte Platte aufgebracht werden soll. In das Bodenelement wird ein poröses Heizorgen eingesetzt, das beispielsweise aus mit Harzen verklebten Glaskugeln oder aus Kiesgestein geformt ist. Flüssigkeitsdicht abgedeckt wird dieses Heizorgan durch ein in das Bodenelement einführbar ausgestaltetes Abdeckfeld. Zum Betrieb ist zunächst ein ins Innere der Platte hineinragendes Zuführrohr vorgesehen, aus dem das Heizwasser in das poröse Heizorgan eingeleitet wird. Das Heizwasser durchdringt unter Abgabe seiner Wärmeenergie den porösen Plattenkern, und wird schließlich mittels eines Abführrohrs, das, gegenüberliegend zur Position des Zuführrohres gelegen, ebenfalls ins Innere der Platte hineinragt, abgeführt. Nachteilig an der bekannten Platte ist eine grundsätzlich vorgesehene komplizierte Steuerungstechnik, mit der die Wärmeabstrahlung eingestellt werden kann, wozu beispielsweise in den Zu- und Abführrohren schwimmend einzuführende Ventilrohre vorgesehen sind. Das vorgefertigte Heizorgan weist überdies eine große Dicke auf, die notwendig ist, damit das Heizorgan bei seiner Handhabung nicht zerbricht. Wegen des damit zwangsläufig klein ausfallenden Quotienten aus Oberfläche zum Volumen des Heizorgans ist die Energienutzung des in das Heizorgan eingeführten warmen Wassers gering, was der Nutzung der bekannten Platte nachteilig entgegensteht.

Zusammengefasst kann also festgestellt werden, dass alle bekannten Heizelemente durch eine geringe Effektivität in der Umsetzung der eingesetzten Energie zur Raumerwärmung gekennzeichnet sind. Ferner sind die bekannten Elemente kompliziert in der Herstellung, was sie verhältnismäßig teuer macht

Der vorliegenden Erfindung liegt also die Aufgabe zugrunde, ein wärmetauschendes Element zur Verfügung zu stellen, dass sich durch eine höhere Effektivität in der Umsetzung der eingesetzten Energie auszeichnet und in seiner Herstellung weniger kompliziert und damit wirtschaftlicher ist.

Der Erfinder erkannte nach zahlreichen Versuchen, dass die Aufgabe in idealer Weise durch ein wärmetauschendes Element gelöst wird mit:
- einer Basisschicht (4) und einer ihr gegenüberliegenden Abschlussschicht (6)
- zwischen der Basisschicht (4) und der Abschlussschicht (6) positionierten Mitteln (3) zur Führung einer Flüssigkeit im Inneren des Elements, wobei die Flüssigkeit der Energieaufnahme bzw. Energieabgabe dient,
- einer mit den Mitteln (3) verbundenen Zuleitung (1) zur Zuführung der Flüssigkeit zum Element,
- einer mit den Mitteln (3) verbundenen Abführung (2) zur Abfuhrung der Flüssigkeit aus dem Element,
wobei
□ die Mittel (3) eine flüssigkeitsdurchlässige, zwischen Basis- und Abschlussschicht (4, 6) positionierte Mittelschicht aus einer Schüttung ungebundener Partikel eines einheitlichen Partikelgrößenbereichs sind,
□ und die Basisschicht (4) und die Abschlussschicht (6) zusammen mit Ihnen benachbarten Seitenbegrenzungen (5) eine flüssigkeitsundurchlässige Umhüllung der flüssigkeitsdurchlässigen Mittelschicht bilden.

Neben den geringen Herstellungskosten zeichnet sich das neue wärmetauschende Element genauso durch geringe Unterhaltskosten aus, weil nur wenig Energie benötigt wird, um die die Mittelschicht durchströmende Flüssigkeit durch das Element zu pumpen. Wegen des Verzichts auf Röhrchen im Inneren des wärmetauschenden Elements kann ein direkter Energietransfer der verwendeten Flüssigkeit mit dem Element genutzt werden, so dass der störende Energieverlust an den Röhrchenwandungen entfällt.

Hergestellt wird das erfindungsgemäße wärmetauschende Element, in dem in eine passende Gleßform als Negativform des zu erstellenden wärmetausehenden Elements zunächst das gießfähig aufbereitete Material für die Abschlussschicht (6) in einer solch vordosierten bzw. vorbestimmten Menge eingegeben wird, dass die Schichtdicke der auszubildenden Abschlussschicht (6) einerseits möglichst gering ist, um die gewünschten wärmedurchlassenden Eigenschaften zu erzielen, andererseits aber dick genug ist, um die notwendige physikalische Belastbarkeit für den späteren Gebrauch des wärmetauschenden Elements zu gewährleisten. Dabei ist die Abschlussschicht (6) nicht selbsttragend auszuführen, weil sie später von der Mittelschicht (3) an allen Berührungspunkten mit den die Mittelschicht (3) ausbildenden Partikeln unterstützt wird.

Auf den Flüssigkeitsepiegel des noch nicht getrockneten Materials für die Abschlussschicht (6) werden bereitgestellte Partikel zur Ausbildung einer flüssigkeitsdurchlässigen Mittelschicht (3) eingestreut. Es ist wesentlich, dass die Partikel zuvor beispielsweise mittels mehrerer nacheinander durchgeführter Siebungen zu einer Fraktion mit einheitlichem durchschnittlichem Teilchendurchmesser zusammengeführt und je nach Notwendigkeit zur Eingabe in die Gießform vordosiert wurden. Nur durch Partikel mit einheitlichem durchschnittlichem Teilchendurchmesser ist gewährleistet, dass die Abschlussschicht (6) später auch durch ihre zahlreichen Berührungspunkte mit den Partikeln ausreichend unterstützt und mit der Basisschicht (4) des erfindungsgemäßen wärmetauschenden Elements verbunden ist.

Eine vorgefertigte und nach Maß der verwendeten Gießform abgelängte Platte bevorzugt aus wärmeisolierendem und gegossenem Material stellt die spätere Basisschicht (4) dar. Die Basisschicht (4) trägt einseitig eine, bevorzugt beidseitig jeweils eine Versteifungsschicht (9), die beispielsweise mittels Verklebung oder Verschmelzung mit der Basisschicht (4) verbunden sind. Den Versteifungssechichten (9) kommt insofern ein größere Bedeutung zu, da die Basisschicht (4) die tragende Komponente des erfindungsgemäßen wärmetauschenden Elements ist und die Versteifungsschichten (9) im besonderen Maße die selbsttragende Eigenschaft der Basisschicht (4) schaffen. Femer stellt eine zwischen Basisschicht (4) und den Partikeln der Mittelschicht (3) angeordnete Versteifungsschicht (9) eine besonders geeignete Benetzungsfläche für eine nun aufzutragende, pastöse Kleberschicht (10) dar. Die Basisschicht (4) wird zusammen mit den optionalen Versteifungsschichten (9) und der Kleberschicht (10) passgenau in die Gießform eingeführt, derart, dass die Kleberschicht (10) in Kontakt kommt mit den die Mittelschicht (3) ausbildenden Partikeln. Schließlich wird auf die Basisschicht (4) ein in Richtung der in die Gießform eingelassenen Abschlussschicht (6) gerichteter Druck ausgeübt, derart, dass die Partikel der Mittelschicht (3) unlöslich eingebettet sind auf der einen Seite in das Material der Abschlussschicht (6) und auf der anderen Seite in die auf die Basisschicht (4) aufgetragene Kleberschicht (10). Nach Trocknung oder Vernetzung der Abschlussschicht (6) kann das nun fertig gestellte erfindungsgemäße wärmetauschende Element entformt werden.

Alternativ zu dem obigen Herstellungsverfahren ist es auch möglich, dass die die Mittelschicht (3) ausbildenden Partikel nicht in den Flüssigkehsspiegel des noch nicht getrockneten Materials für die Abschlussschicht (6), sondern stattdessen in die Kleberschicht (10) eingestreut werden, welche zuvor entweder auf die Basisschicht (4) aufgebracht wurde oder auf eine zwischen Basisschicht (4) und den Partikeln der Mittelschicht (3) vorgesehene Versteifungsschicht (9).

In einer besonderen Ausführungsform entsteht das erfindungsgemäße wärmetauschende Element, indem zunächst in eine passende erste Gießform als Negativform des zu erstellenden wärmetauschenden Elements zunächst das gießfähig aufbereitete Material für die Abschlussschicht (6) eingegeben wird. In einer zweiten Gießform wird optional zunächst eine Versteifungsschicht (9) eingelegt und anschließend das gießfähig aufbereitete Material für die Basisschicht (4) eingegeben. In den Flüssigkeitsspiegel des noch nicht getrockneten Materials für die Basisschicht (4) werden bereitgestellte Partikel zur Ausbildung einer flüssig-Keltsdurchlässigen Mittelschicht (3) eingestreut. Nach Trocknung oder Vernetzung der Basisschicht (4) wird diese entformt und zusammen mit den die Mittelschicht (3) ausbildenden Partikel in die erste Gießform mit der Abschlussschicht (6) gegeben derart, dass die Partikel in den Flüssigkeitsspiegel der Abschlussschicht (6) eingedrückt werden.

Zur Ausbildung der flüssigkeitsdurchlässigen Mittelschicht (3) werden Partikel gleichen Durchmessers eingesetzt, die bevorzugt durch mehrere nacheinander durchgeführte Siebungen zwecks Aussortieren kleinerer wie größerer Partikel gewonnen werden. Je nach Einsatzzweck des erfindungsgemäßen Elements
- weisen die Partikel der flüssigkeitsdurchlässigen Mittelschicht (3) eine geringe Energiespetcherfähigkeit auf und sind ausgesucht aus der Liste, umfassend: Teilchen aus porösem Naturstein, Glasschaumkugeln, Teilchen aus aufgeschäumtem Ton und Leca®, aufgeschäumte und expandierte Polystyrol-Schaumkugeln;
- oder sie weisen eine hohe Energiespeicherfähigkeit auf und sind ausgesucht aus der Liste, umfassend: Kies. Betonkugeln, Metallkugeln,

In Versuchen zeigte sich eine durchschnittliche Teilchengröße für die die flüssigkeitsdurchlässige Mittelschicht (3) bildenden Partikel von 4 bis G mm als besondere geeignet. Ein solches Maß liegt bevorzugt etwas über der Dicke der Mittelschicht (3), die so aus einer Lage der sie bildenden Partikel aufgebaut ist, womit berücksichtigt ist, dass ein Teil der Partikel in die Abschlussschicht (6) und in die Basisschicht (4) bzw. die Kleberschicht (10) hineinragt. Auf diese Weise ist eine besonders gute Verbindung der Abschlusschicht (6) mit der Basisschicht (4) gegeben, da jedes einzelne Partikelteilchen wie eine Säule eine beidseitig verklebende Verbindung zwischen diesen beiden Schichten darstellt. Gleichzeitig wird auf diese Weise gewährleistet, dass die flüssigkeitsdurchlässige Mittelschicht (3) in einem vorbestimmten Maße genügend dünn gehalten wird, um einen großen Teil des durch die Mittelschicht (3) geführten Wassers oberflächennah an der Abschlussschicht (6) zur Abgabe eines möglichst großen Wärmeenergiemenge vorbeizuleiten. Die Abschlussschicht (6) kann wiederum sehr dünn gehalten werden, da sie durch die zahlreichen Verbindungspunkte mit den Partikeln der Mittelschicht (3) flächendeckend und in geringen Abständen zueinander unterstützt wird. So ist sichergestellt, dass ein möglichst großer Teil der Wärmeenergie des durch das erfindungegamäße Element geführten Wassers an die Umgebung abgegeben werden kann.

Als Basisschicht (4) kommt bevorzugt ein vorgefertigtes Formteil in Form einer gegossenen oder (auf)geschäumten Platte von mehreren Millimetern bis wenigen Zentimetern Dicke zum Einsatz. In vielen Fällen, in denen die erfindungsgemäßen Elemente als Heizelemente genutzt werden sollen, ist es vorteilhaft, wenn die flüssigkeitsundurchlässige Basisschicht (4) genauso wie die flüssigkeitsundurchlässigen und auch als Formteile herstellbaren Seitenbegrenzungen (5) des erfindungsgemäßen Elements aus wärmeisolierendem Material besteht. Besonders bietet sich hierfür extrudierter Polystyrolschaum, Polyurethanschaum sowie eine Masse aus Glaskugein in Kunststoffbindemittel oder in zementösem Bindemittel an. In Fällen solcher Anwendungen, in denen die erfindungsgemäßen Elemente zur Wärmeaufnahme wie in Sonnenkollekturen genutzt werden sollen, ist für die Basisschicht (4) und gegebenenfalls für die Seitenbegrenzungen (5) ein Material mit hoher Energiespeicherfähigkeit von Vorteil.

Die Basisschicht (4) trägt einseitig eine, bevorzugt beidseitig jeweils eine Versteifungaschicht (9), die beispielsweise mittels Verklebung oder Verschmelzung mit der Basisschicht (4) verbunden sind. Als Versteifungsschicht (9) kommen bevorzugt Glasgittergewebe, Metallgewebe, Polyestergewebe oder -fließe zum Einsatz

Bei dem erfindungsgemaßen Element ist es vorgesehen, dass aus praktischen Gründen die Basisschicht (4) durch die Zuleitung (1) in der Form einer Zentralzuleitung oder mehrerer dezentraler Zuleitungen und die Abführung (2) in der Form einer Zentralabführung oder mehrerer dezentraler Abführungen durchbohrt ist. Genauso ist es vorstellbar, dass die Zuleitung (1) und/oder die Abführung (2) durch die Seitenbegrenzungen (5) geführt sind.

Zur Verbindung mehrerer erfindungsgemäßer Elemente können diese an mehreren Stellen mit Verbindungsstegen verbunden sein, die dann beispielsweise die Seitenbegrenzungen (5) durchbohren. Bevorzugt ist es jedoch, wenn die Umhüllung aus Basisschicht (4), Seitenbegrenzungen (5) und Abschlussschicht (6) ausschließlich von der jeweils mit der flüssigkeitsdurchlässigen Mittelschicht (3) verbundenen Zuleitung (1) und Abführung (2) durchbrochen ist.

Die flüssigkeitsundurchlässige Abschlussschicht (6) besteht bevorzugt aus einem gießfähig aufbereitbarem, zu trocknendem und/oder härtbarem Material Wie Polymerbeton und Epoxydharz und ist wärmeleitend eingestellt. In einer bevorzugten Ausführung sind die Seitenbegrenzungen (5) des erfindungsgemäßen wärmetauschenden Elements einstückig mit der Abschlussschicht (6) verbunden. Dieses wird beispielsweise so bewerkstelligt dass nach Eingabe des gießfähig aufbereiteten Materials für die Abschlussschicht (6) in die Gießform die als Formteil vorbereitete Basisschicht (4) zusammen mit der (den) optionalen Versteifungsschicht(en) (9) und der Kleberschicht (10) so in die Gießform eingepresst wird, dass das Material für die Abschlussschicht (6) am Rand der Gießform hochgedrückt wird und so nach I rocknung bzw. Härtung eine die Basisschicht (4) umlaufend umgebende Seitenbegrenzung (5) für das erfindungsgemäße Element bildet.

Es ist auch möglich, dass die Abschlussschicht (6) aus einer vorgefertigten Holz- oder Steinbelegung mit einer basisbildenden flüssigkeitsundurchlässigen Kleberschicht (11) besteht. In diesem Fall werden die Partikel der Mittelschicht (3) in den Flüssigkeespiegel dieser pastösen oder fließfähigen Kleberschicht (11) eingestreut.

Je nach Anwendung kann es von Vorteil sein, wenn unterhalb der Basisschicht (4) noch eine Wärmeisolationsschicht (8) angeordnet ist, die mit der Basisschicht (4) fest verbunden, zum Beispiel verklebt wird. Gerade hier bietet es sich dann besonders an, wenn die Basisschicht (4) bei entsprechender Anwendung des erfindungsgemäßen Elementes zur Wärmeaufnahme aus einem Material mit hoher Energiespeicherfähigkeit besteht oder ein solches Material umfasst.

Genauso kann auf die Abschlussschicht (6) noch eine Nutzbeschichtung (12), idealerweise und gewöhnlich aus einem warmeleltenden Material wie Beton oder Kunststoff aufgebracht sein, um gewünschte Oberflächeneigenschaften des erfindungsgemäßen Elements nach Belieben einstellen zu können. Elastische oder besonders harte Oberflächen sind so genauso möglich wie besonders glatte und abwischbare oder strukturierte und rutschhemmende Oberflächen.

Auch wenn nicht darauf beschränkt, gilt Wasser als die bevorzugte Flüssigkeit, die der flüssigkeitsdurchlässigen Mittelschicht (3) über die Zuleitung (1) zugeführt und mittels der Abführung (2) wieder entnommen wird. Genauso vorstellbar sind Flüssigkeiten auf Ölbasis.

Das vorgeschlagene wärmetauschende Element kann in jeder beliebigen Form zur Verfügung gestellt werden, beispielsweise um aus mehreren erfindungsgemäßen Elementen einen mosaikartigen Bodenbelag herzustellen. Dabei können die einzelnen Elemente in beliebigen, untereinander auch variierenden Abmessungen und in einer oder mehreren Grundformen, wie quadratisch, rechteckig, rauten-, kreis- oder halbkreisförmig, drei- oder vieleckig vorgesehen sein. Auch ist es vorstellbar, dass die einzelnen Elemente verschiedenfarbig ausgestaltet sind, um beliebige auch Bild gestaltende Mosaikmuster darstellen zu können.

Um ein Verschieben der Elemente relativ zu einem Boden, auf den sie aufgebracht sein sollen, zu verhindern, ist es zweckmäßig, die Elemente mit einer Verklebung auf dem weitestgehend ebenen Boden zu fixieren.

In Versuchen zeigten sich die erfindungsgemäßen Elemente besonders gut geeignet bei ihrer Ausgestaltung als Gardarobenflächen, als Fußboden- und hier speziell als Terrassenbelag, als Decken- oder Treppenbelag, zur Bedeckung von Wänden auch in gewölbter Ausgestaltung, wie zum Beispiel als Säulen, oder zur freien Aufstellung im Raum als Geländer bzw. Raumteiler. Erfolgreiche Versuche wurden ebenso angestellt bei der Ausgestaltung der erfindungsgemäßen Elemente als Dachpfannen.

Werden die erfindungsgemäßen Elemente innerhalb von Räumen eingesetzt, werden sie gewöhnlich zur Nutzung als Heizelement aufgebaut. Die Partikel der Mittelschicht (3) bestehen dann aus einem Material oder umfassen ein solches mit geringer Energiespeicherfähigkeit und den Elementen wird aus einem Warmwasserreservoir, zum Beispiel einem Warmwasserbehälter einer Heizungsanlage, warmes Wasser mittels einer Pumpe (7) zugeführt. In den Elementen gibt das Wasser seine Wärme an die Mittelschicht ab, die die Wärme selbst nicht speichern kann, so dass die Wärme über die Abschlussschicht (6) der Elemente in die Räume abgegeben wird. Das abgekühlte Wasser wird aus den Elementen abgeführt und dem Warmwasserreservoir wieder zugeführt.

Werden die erfindungsgemaßen Elemente außerhalb von Gebäuden im Freien eingesetzt, können sie zur Nutzung als Sonnenkollektoren aufgebaut werden. Die Partikel der Mittelschicht (3) und/oder die Basisschicht (4) bestehen dann aus einem Material oder umfassen ein solches mit hoher Energiespeicherfähigkeit und den Elementen wird mittels einer Pumpe (7) kaltes Wasser zugeführt. Durch Sonneneinstrahlung erwärmt sich zunächst die äußere Schicht der Elemente, entweder die Abschlussschicht (6) oder die darauf aufgebrachte Nutzbeschichtung (12). Durch deren wärmeleitende Ausführung wird ihre Wärme an die Partikel der Mittelschicht (3) und/oder die Basisschicht (4) weitergegeben, die sich in Folge erwärmt und ihrerseits das die Mittelschicht (3) durchströmende Wasser erwärmen kann. Das erwärmte Wasser wird aus den Elementen abgeführt und anschließend einem Wärmetauscher zugeführt, wo das in den Elementen erwärmte Wasser ein anderes Medium, gewöhnlich Wasser eines zweiten Wasserkreislaufes, erwärmt. Schließlich wird das aus den Elementen abgeführte und im Wärmetauscher wieder erkaltete Wasser Ober die Pumpe (7) den Elementen erneut zugeführt.

Mit den beiden folgenden Figuren erfindungsgemäßer Ausführungsformen soll die Erfindung weitergehend veranschaulicht werden.

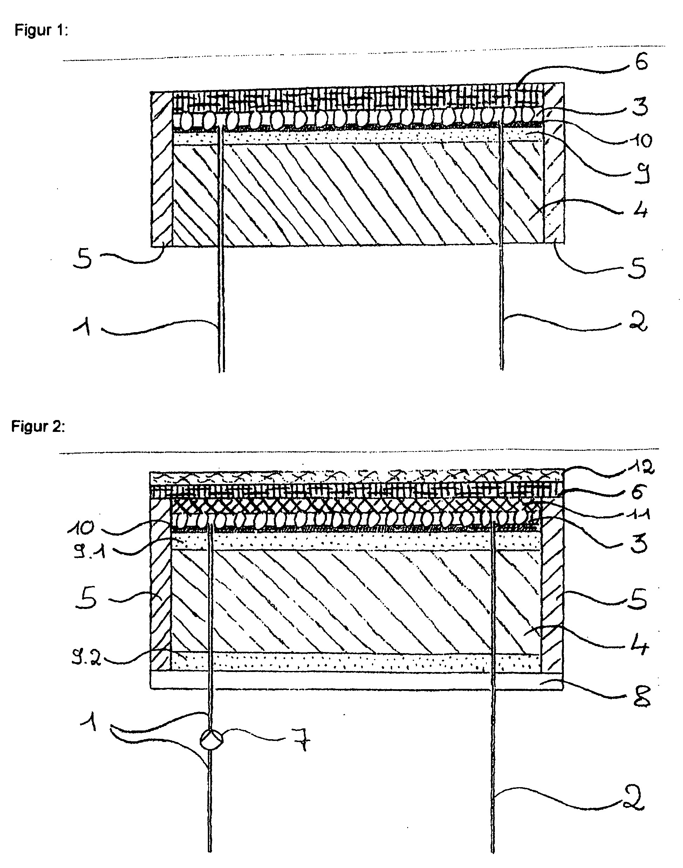

Figur 1 zeigt einen vertikalen Schnitt durch das erfindungsgemäße wärmetauschende Element in einer seiner einfachsten Ausführungsvarianten. Die flüssigkeitsdurchlässige Mittelschicht (3) wird in diesem Fall gebildet aus aufgeschäumten und expandierten Polystyrol-Schaumkugeln von wenigen Millimetern Durchmesser, die fixiert werden auf der einen Seite von einer flüssigkeitsundurchlässigen, wärmeleitenden Abschlussschicht (6) aus gegossenem wärmeleitendem Kunststoff und auf der anderen Seite von einer Kleberschicht (10). Die Kleberschicht (10) ist aufgetragen auf eine Versteifungsschicht (9) hier aus Glasgittergewebe, das wiederum verklebt ist mit der flüssigkeitsundurchlässigen Basisschicht (4) hauptsächlich aus extrudiertem Polystyrolschaum. Die Basisschicht (4) weist eine Dicke von wenigen Zentimetern, die Mittelschicht (3) und genauso die Abschlussschicht (6) weisen jeweils eine Dicke von wenigen Millimetern auf. Das derart aufgebaute Schichtengebilde ist ringsherum mit einer flüssigkeitsundurchlässigen Seitenbegrenzung (5) aus extrudiertem Polystyrolschaum unlöslich verbunden, so dass Basisschicht (4), Abschlussschicht (6) und die Seitenbegrenzung (5) eine die Mittelschicht (3) vollständig umgebende Umhüllung darstellen. Das so aufgebaute Gebilde stellt eine Bodenfliese zur Installation bevorzugt in Nassbereichen, wie zum Beispiel Badezimmer, dar. Die Basisschicht (4), die Versteifungsschicht (9) und die Kleberschicht (10) sind an zwei sich gegenüberliegenden Positionen durchbohrt von einer Zuleitung (1) und einer Abführung (2). die beide mit der Mittelschicht (3) wasserdurchlässig verbunden sind. Warmes Wasser kann so durch die Zuleitung (1) in die Mittelschicht (3) geleitet werden, wo das Wasser unter Abgabe seiner Warme durch die Mittelschicht (3) hindurchwandert. Dabei strahlt die Bodenfliese über die Abschlussschicht (6) Wärme ab, während die wärmeisolierende Basisschicht (4) eine Erwärmung der unter der Fliese gelegenen Baufläche verhindert Nachdem das Wasser durch die Mittelschicht (3) hindurch gewandert ist, wird es durch die Abführung (2) aus der Mittelschicht (3) wieder abgezogen.

Figur 2 zeigt einen vertikalen Schnitt durch das erfindungsgemäße wärmetauschende Element in einer weiteren Ausführungsvariante. In diesem Fall wird die flüssigkeitsdurchlässige Mittelschicht (3) hauptsächlich aus Betonkugeln gebildet, die sich durch eine hohe Energiespeicherfähigkeit auszeichnen. Die Betonkugeln werden abschlussschichtseitig auf der einen Seite fixiert von einer ersten flüssigkeitsundurchlässigen Kleberschicht (11), die die Basis bildet für eine dünne Steinbelegung als Abschlussschicht (6). Die Abschlussschicht (6) ist fest mit einer eine erhöhte Tritt- und Stoßfestigkeit garantierenden, wärmeleitenden und flüssigkeitsundurchlässigen Nutzbeschichtung (12) aus einem trittfesten Kunststoff von wenigen Millimetern Dicke verbunden. Basisschichtseitig werden die Betonkugeln fixiert durch eine zweite Kleberschicht (10), die aufgetragen ist auf eine erste Versteifungsschicht (9.1) hier aus Polyestergewebe. Diese erste Versteifungsschicht (9.1) ist wiederum verklebt mit der Vorderseite der flüssigkeitsundurchlässigen, aus Glaskugeln in zementösem Bindemittel hergestellten Basisschicht (4), die auch auf der Rückseite mit einer zweiten Versteifungsschicht (9.2) versehen ist. Die beidseitig mit den Versteifungsschichten (9.1, 9.2) und der zweiten Kleberschicht (10) versehene Basisschicht (4) und die mit der ersten Kleberschicht (11) versehene Abschlussschicht (6) sind ringsherum mit einer flüssigkeitsundurchlässigen Seitenbegrenzung (5) aus dem gleichen Material, aus dem auch die Basisschicht (4) besteht, unlöslich verbunden, so dass Basisschicht (4), Abschlussschicht (6) zusammen mit der ersten Kleberschicht (11) und die Seitenbegrenzung (5) eine die Mittelschicht (3) vollständig umgebende flüssigkeitsundurchlässige Umhüllung darstellen. Unterhalb der Basisschicht (4) ist ferner eine Wärmeisolationsschicht (8) aus extrudiertem Polystyrolschaum vorgesehen. Das so aufgebaute Gebilde stellt eine Sonnenkollektorfliese zur Installation im Außenbereich, beispielsweise auf der Terrasse, dar. Die Basisschicht (4), die beiden Versteifungsschichten (9.1, 9.2), die zweite Kleberschicht (10) und die Wärmeisolationsschicht (8) sind an zwei sich gegenüberliegenden Positionen durchbohrt von einer Zuleitung (1) und einer Abführung (2), die beide mit der Mittelschicht (3) wasserdurchlässig verbunden sind. Kaltes Wasser kann so mit Hilfe einer Pumpe (7) durch die Zuleitung (1) in die Mittelschicht (3) gepumpt werden, wo das Wasser unter Erwärmung durch die Sonnenenergie durch die Mittelschicht (3) hindurchwandert. Dabei verhindern die Basisschicht (4) zusammen mit der Wärmeisolationsschicht (8) eine Erwärmung der unter der Sonnenkollektorfliese gelegenen Baufläche. Nachdem das Wasser durch die Mittelschicht (3) hindurch gewandert ist, wird es durch die Abführung (2) aus der Mittelschicht (3) wieder abgezogen und einem nicht mit dargestellten Wärmetauscher, einem Warmwasserreservoir, zugeführt. Nach Abgabe der gewonnenen Sonnenwärme im Wärmetauscher wird das so wieder abgekühlte Wasser über die Pumpe (7) erneut der Sonnenkollektorfliese zugeführt.

### Begriffsliste:

- (1): Zuleitung
- (2): Abführung
- (3): flüssigkeitsdurchlässige Mittelschicht
- (4): flüssigkeitsundurchlässige Basisschicht
- (5): flüssigkeitsundurchlässige Seitenbegrenzung
- (6): flüssigkeitsundurchlässige Abschlussschicht
- (7): Pumpe
- (8): Wärmeisolationsschicht
- (9): Versteifungsschicht
- (10): Kleberschicht zur Verklebung der Basisschicht (4) mit den Partikeln der Mittelschicht
- (11): Kleberschicht für Abschlussschicht (6) als Holz- oder Steinbelegung
- (12): Nutzbeschichtung

## Patentansprüche

1. Wärmetauschendes Element, mit
- einer Basisschicht (4) und einer ihr gegenüberliegenden Abschlussschicht (6)
- zwischen der Basisschicht (4) und der Abschlussschicht (6) positionierten Mitteln (3) zur Führung einer Flüssigkeit im Inneren des Elements, wobei die Flüssigkeit der Energieaufnahme bzw. Energieabgabe dient,
- einer mit den Mitteln (3) verbundenen Zuleitung (1) zur Zuführung der Flüssigkeit zum Element,
- einer mit den Mitteln (3) verbundenen Abführung (2) zur Abführung der Flüssigkeit aus dem Element
**dadurch gekennzeichnet, dass**
□ die Mittel (3) eine flüssigkeitsdurchläurige Mittelschicht aus einer Schüttung ungebundener Partikel eines einheitlichen Partikelgrößenbereichs sind,
□ die Basisschicht (4) und die Abschlussschicht (6) zusammen mit ihnen benachbarten Seitenbegrenzungen (5) eine flüssigkeitsundurchlässige Umhüllung der flüssigkeitsdurchlässigen Mittelschicht bilden.

2. Wärmetauschendes Element nach Patentanspruch 1, **dadurch gekennzeichnet, dass** die Dicke der flüssigkeitsdurchlässigen Mittelschicht (3) geringer als der durchschnittliche Durchmesser der sie bildenden Partikel ist.

3. Wärmetauschendes Element nach einem der Patentansprüche 1 und 2, **dadurch gekennzeichnet, dass** die Partikel der flüssigkeitsdurchlässigen Mittelschicht (3) ausgesucht sind aus der Liste, umfassend: Kies, Betonkugeln, Teilchen aus porösem Naturstein, Glasschaumkugeln, Teilchen aus aufgeschäumtem Ton und Leca®, Metallkugeln, aufgeschäumte und expandierte Polystyrol-Schaumkugeln.

4. Wärmetauschendes Element nach einem der Patentansprüche 1 bis 3, **dadurch gekennzeichnet, dass** die Abschlussschicht (6) aus einem Material besteht oder ein solches umfasst, ausgesucht aus Polymerbeton und Epoxydharz.

5. Wärmetauschendes Element nach einem der Patentansprüche 1 bis 4, **dadurch gekennzeichnet, dass** die Abschlussschicht (8) und die Seitenbegrenzungen (5) einstü ckig miteinander verbunden sind.

6. Wärmetauschendes Element nach einem der Patentansprüche 1 bis 4, **dadurch gekennzeichnet, dass** die Abschlussschicht (6) aus einer vorgefertigten Holz- oder Steinbelegung mit einer basisbildenden Kleberschicht (11) besteht.

7. Wärmetauschendes Element nach einem der Patentansprüche 1 bis 6, **dadurch gekennzeichnet, dass** die Basisschicht (4) aus wärmeisolierendem Material besteht.

8. Wärmetauschendes Element nach einem der Patentansprüche 1 bis 7, **dadurch gekennzeichnet, dass** die Basisschicht (4) mindestens einseitig eine Versteifungsschicht (9) aufweist.

9. Wärmetauschendes Element nach einem der Patentansprüche 1 bis 8. **dadurch gekennzeichnet, dass** die Umhüllung der flüssigkeitsdurchlässigen Mittelschicht (3) aus Basisschicht (4), Seitenbegrenzungen (5) und Abschlussschicht (6) ausschließlich von der jeweils mit der flüssigkeitsdurchlässigen Mittelschicht verbundenen Zuleitung (1) und Abführung (2) durchbrochen ist.

10. Wärmetauschendes Element nach einem der Patentansprüche 1 bis 9, **dadurch gekennzeichnet, dass** die Zuleitung (1) und/oder die Abführung (2) Ober mindestens eine Pumpe (7) mit einem wärmetauschenden Element verbunden ist.

11. Wärmetauschendes Element nach einem der Patentansprüche 1 bis 10, **dadurch gekennzeichnet, dass** das wärmetauschende Element eine Fliese, Kachel oder ein weiteres flächiges Bauelement zur Bedeckung von Wänden und/oder Böden ist.

12. Verfahren zu Herstellung eines wärmetauschenden Elements nach einem der Ansprüche 1 bis 4 und 7 bis 11, umfassend:
(i.) Bereitstellen einer Gießform;
(ii.) Aufbereitung eines Materials in gießfähiger Form für die Abschlussschicht (6) und Eingeben einer vordosierten Menge dieses Materials in die Gießform:
(iii.) Einstreuen einer vordosierten Menge einer einheitlichen Siebfraktion von Partikein in den Flüssigkeitsspiegel des Materials für die Abschlussschicht (6) zur Ausbildung einer flüssigkeitsdurchlässigen Mittelschicht (3);
(iv.) Bereitstellen einer vorgefertigten Platte als Basisschicht (4);
(v.) Auftragen einer pastösen Kleberschicht (10) auf eine Seite der Basisschicht (4);
(vi.) Passgenaues Einführen der Basisschicht (4) in die Gießform, derart, dass die Kleberschicht (10) in Kontakt kommt mit den die Mittelschicht (3) ausbildenden Partikeln;
(vii.) Einpressen der Basisschicht (4) in die Gießform, derart, dass die Partikel der Mittelschicht (3) unlöslich eingebettet sind auf der einen Seite in das Material der Abschlussschicht (6) und auf der anderen Seite in die auf die Basisschicht (4) aufgetragene Kleberschicht (10).

13. Verfahren zu Herstellung eines wärmetauschenden Elements nach einem der Ansprüche 1 bis 4 und 7 bis 11, umfassend:
(i.) Bereitstellen einer Gießform:
(ii.) Aufbereitung eines Materials in gießfähiger Form für die Abschlussschicht (6) und Eingeben einer vordosierten Menge dieses Materials in die Gießform;
(iii.) Bereitstellen einer vorgefertigten Platte als Basisschicht (4);
(iv.) Auftragen einer pastösen Kleberschicht (10) auf eine Seite der Basisschicht (4);
(v.) Einstreuen einer vordosierten Menge einer einheitlichen Siebfraktion von Partikeln in den Flüssigkeitsspiegel der Kleberschicht (10) zur Ausbildung einer flüssigkeitsdurchlässigen Mittelschicht (3);
(vi.) Passgenaues Einführen der Basisschicht (4) in die Gießform, derart, dass die die Mittelschicht (3) ausbildenden Partikel eingedrückt werden in den Flüssigkeitsspiegel des Materials für die Abschlussschicht (6);
(vii.) Einpressen der Basisschicht (4) in die Gießform, derart, dass die Partikel der Mittelschicht (3) unlöslich eingebettet sind auf der einen Seite in das Material der Abschlussschicht (6) und auf der anderen Seite in die auf die Basisschicht (4) aufgetragene Kleberschicht (10).
